# EUROPÄISCHE PATENTSCHRIFT

(11) **EP 1 720 739 B1**
(45) Veröffentlichungstag und Bekanntmachung des Hinweises auf die Patenterteilung: **03.04.2013**
(21) Anmeldenummer: 05729748.3
(22) Anmeldetag: 25.02.2005
(51) Int. Cl.: B60R 21/0132

(54) **VORRICHTUNG ZUM ERMITTELN EINER KIPPTENDENZ**
DEVICE FOR DETERMINING A TENDENCY TO TILT
DISPOSITIF POUR DETERMINER UNE TENDANCE AU BASCULEMENT

(30) Priorität: 01.03.2004 DE 102004010409
(43) Veröffentlichungstag der Anmeldung: 15.11.2006
(73) Patentinhaber: Continental Teves AG & Co. oHG, 60488 Frankfurt am Main (DE)
(72) Erfinder: DIEBOLD, Jürgen, 65760 Eschborn (DE); STÖLZL, Stefan, 69469 Weinheim (DE); FENNEL, Helmut, 65812 Bad Soden (DE); KLUG, Michael, 63225 Langen (DE)
(74) Vertreter: Büchner, Jörg
(86) Internationale Anmeldenummer: PCT/EP2005/050825
(87) Internationale Veröffentlichungsnummer: WO 2005/082680

(56) Entgegenhaltungen:
- EP-A- 1 386 805
- WO-A-02/36401
- WO-A-96/16846
- DE-A1- 19 811 865
- US-A1- 2003 182 041
- US-B1- 6 192 305

## Beschreibung

Die Erfindung betrifft eine Vorrichtung zum Ermitteln einer Kipptendenz um die Längsachse und einer Drehtendenz um die Hochachse eines Fahrzeugs, mit einem Erfassungssystem.

Die Erfindung verwendet die Erfassung einer Fahrzeugkipptendenz und einer Drehtendenz bei einem Kraftfahrzeug, welche speziell dahingehend ausgebildet sind, dass sie bei der Ermittlung eines Auslösesignals für ein Insassenschutzmittel herangezogen werden können.

Unter dem Begriff Fahrstabilitätsregelung (ESP) vereinigen sich mindestens fünf Prinzipien zur aktiven fahrerunabhängigen Beeinflussung des Fahrverhaltens eines Fahrzeugs mittels vorgebbarer Drücke in einzelnen Radbremsen und mittels Eingriff in das Motormanagement des Antriebsmotors. Dabei handelt es sich um Bremsschlupfregelung (ABS), welche während eines Bremsvorgangs das Blockieren einzelner Räder verhindern soll, um Antriebsschlupfregelung (ASR), welche das Durchdrehen der angetriebenen Räder verhindert, um elektronische Bremskraftverteilung (EBV), welche das Verhältnis der Bremskräfte zwischen Vorder- und Hinterachse des Fahrzeugs regelt, um eine Giermomentregelung (GMR), welche für stabile Fahrzustände beim Durchfahren einer Kurve sorgt sowie um eine Überschlag- oder - -rollregelung (ARP), welche für stabiles Fahrzeugverhalten bei Kipptendenzen des Fahrzeugs sorgt.

Es ist bekannt, in Kraftfahrzeugen Insassenschutzmittel und insbesondere aufblasbare Insassen-Rückhaltesysteme einzubauen, so z. B. Front-Airbags für Fahrer und Beifahrer. Auch Seiten-Airbags werden zunehmend in Fahrzeugen eingesetzt. Seiten-Airbags erfassen über Sensoren einen Seitenaufprall des Fahrzeugs. Die Seiten-Airbags werden in Reaktion auf die erfassten Sensordaten ausgelöst. Als neuere Bauart aufblasbarer Rückhaltesysteme sind Seitenvorhang-Airbags (side curtain airbags) bekannt geworden. Diese entfalten sich von der Decke oder von einem Bereich in der Nähe des Dachholms und dehnen sich vor den Seitenfenstern des Fahrzeugs nach unten aus und sind dazu vorgesehen, Insassen bei Kollisionen des Fahrzeugs mit Objekten zu schützen.

Die Airbagsysteme werden auf Basis von Beschleunigungs- und/oder Druckinformationen aktiviert. Dabei sind zunächst Beschleunigungssensoren im Bereich des Fahrzeugschwerpunktes in Längs- und Querrichtung notwendig. Diese Sensoren befinden sich in der Regel im zentralen Airbagsteuergerät. Für eine sichere Sensierung eines Aufpralls sind darüber hinaus so genannte Upfront- bzw. Side-Sensoren notwendig. Diese können als Beschleunigungs- oder Drucksensoren ausgeführt sein. Das Airbagsteuergerät wertet diese Informationen aus und aktiviert die jeweiligen Airbags. Um eine Fehlauslösung zu verhindern ist ein ausgeklügelter Crash-Algorithmus erforderlich. Dieser trifft mittels Schwellenwertabfragen und Signalverlaufsanalysen eine Auslöseentscheidung während der ersten Millisekunden des Aufpralls. Bei einem Frontaufprall muss die Auslöseentscheidung während der ersten ca. 30ms bei einem Seitenaufprall während der ersten 10ms getroffen werden. Die Wahl bzw. die Festlegung der entsprechenden Schwellenwerte stellt deshalb die wesentliche Schwierigkeit dar.

Ein Seitenaufprall wird nur dann sicher erkannt, wenn die Kollision im Bereich der vorhanden Side-Sensoren (Fahrer- und Beifahrertür und möglicherweise B-Säule und möglicherweise C-Säule) erfolgt. Findet die Kollision hingegen außerhalb dieser Bereiche statt, ist eine sichere Erkennung nicht gewährleistet und die Auslösung wird unterdrückt.

Ein Überschlag kann zurzeit nur dann sicher sensiert werden, wenn neben einem Beschleunigungssensor, der in Richtung der Fahrzeug z-Achse orientiert ist, auch ein Rollratensensor vorhanden ist. Diese Sensorik erlaubt es ein Überrollen des Fahrzeuges sicher zu erkennen (Die Fahrt durch eine Steilkurve muss im Gegensatz dazu sicher ausgeschlossen werden.) und basierend auf diesen Informationen Airbags auszulösen.

Neben den Airbags ist als nicht aufblasbares Rückhaltesystem ein mit den Sicherheitsgurten verbundenes reversiblen Gurtstraffersystem bekannt, durch dessen Wirkung im Falle einer Sensorauslösung der Spielraum der Sicherheitsgurte verringert wird.

Alle vorstehend genannten Systeme können bei diesen extremen Instabilitäten des Fahrzeugs potentiell zum Einsatz kommen Heutige passive (Airbag) und aktive (Bremssysteme wie ESP - Elektronisches Stabilitätsprogramm / ARP - Active Rollover Protection) Sicherheitssysteme existieren zurzeit unabhängig von einander in ihren jeweiligen Ausprägungen (ARP-WO2002036401, ESP-EP792228 B1). Im Allgemeinen werden aktive Sicherheitssysteme auf der Grundlage eines energiebasierten Modells bestimmt, wann ein Fahrzeug kippt bzw. schleudert. Passiven Sicherheitssysteme (z. B. Airbag) werden erst nach einem Aufprall aktiviert. Dabei sind die komplexen Aktivierungsentscheidungen innerhalb weniger Sekundenbruchteile zu treffen.

Es wäre daher wünschenswert, eine schnellere und präzisere Information zu erhalten, um auf deren Basis festzulegen, wann die Insassenschutzmittel auszulösen sind. Dabei sollten auch Fahrsituationen erfasst werden, die heute noch keine Aktivierung der Insassenschutzmittel zur Folge haben, da bei nicht vorhandener Überrollsensierung die notwendigen Auslösekriterien (u.a. Beschleunigung) nicht überschritten worden wären.

Aus der EP 1 386 805 A2 ist ein gattungsbilendes Verfahren gemäß dem Oberbegriff von Anspruch 1 zu entnehmen, bei dem ebenfalls bereits die Kipptendenz ermittelt wird.

Der Erfindung liegt die Aufgabe zugrunde, die Aktivierungsentscheidungen der Insassenschutzmittel auf Grundlage dieser Kipptendenz weiter zu verbessern.

Erfindungsgemäß wird diese Aufgabe durch eine Vorrichtung mit den Merkmalen des Anspruchs 1 gelöst. Dabei kann die Vorrichtung mit einem oder mehreren gleichen Sensoren ausgerüstet sein, die entweder redundante Signale verarbeiten, wie zum Beispiel Gierratensensoren, oder die an anderen Positionen des Fahrzeugs angeordnet positionsrelevante Informationen erfassen, wie zum Beispiel Querbeschleunigungssensoren.

Vorteilhafte Weiterbildungen der Vorrichtung sind in den Unteransprüchen angegeben.

Die Erfindungsidee besteht darin, eine Vorrichtung zum Ermitteln einer Kipptendenz um die Längsachse und einer Drehtendenz um die Hochachse eines Fahrzeugs, mit einem Erfassungssystem vorzusehen, die sich auszeichnet durch einen Querbeschleunigungssensor, der ein Querbeschleunigungssignal erzeugt, einen Gierratensensor, der ein Drehratensignal erzeugt, einen Lenkwinkelsensor, der ein Lenkwinkelsignal erzeugt, Raddrehzahlsensoren, die Drehbewegungssignale der Räder erzeugen, und die einen Regler aufweist, der in Reaktion auf den Lenkradwinkel, die Lenkgeschwindigkeit und die Fahrzeuggeschwindigkeit eine Kipptendenz um die Längsachse des Fahrzeugs feststellt und der in Reaktion auf den Querbeschleunigungssensor, den Gierratensensor, den Lenkwinkelsensor und den Raddrehzahlsensoren die Drehtendenz um die Hochachse des Fahrzeugs feststellt, und wobei der Regler in Abhängigkeit von der Ausprägung dieser Tendenzen ein Auslösesignal für mindestens ein Insassenschutzmittel erzeugt. Die Erfindung nutzt nun die Informationen über die Fahrdynamik der aktiven Sicherheitssysteme basierend auf Querbeschleunigung, Gierrate, Lenkwinkel, Fahrzeuggeschwindigkeit (aus Drehbewegungssignalen der Räder), um sie den passiven-Systemen (z.B. Airbag) zur Verfügung zu stellen. Diese können dann aufgrund der zusätzlichen Informationen schon vor einem möglichen Unfall Auslöseentscheidungen treffen bzw. die Auslösealgorithmen aufgrund der erkannten kritischen Fahrsituation an die jeweilige Situation adaptieren, um dann im Falle einer Kollision rechtzeitig und angepasst auszulösen. Die Erfindung sieht vor, beide Systeme so zu kombinieren, dass eine verbesserte Sicherheitsfunktionalität zur Verfügung steht und/oder Komponentenkosten eingespart werden können.

Mit der vorliegenden Erfindung wird ein verbessertes Sicherheits-Erfassungssystem geschaffen, das dazu eingesetzt werden kann, genauer festzulegen, wann die Insassenschutzmittel des Fahrzeugs auszulösen sind. Das Sicherheits-Erfassungssystem weist Querbeschleunigungssensoren, einen Gierratensensor oder bei redundanter Ausbildung zwei Gierratensensoren und einen Lenkradwinkelsensor sowie für jedes Rad einen Raddrehzahlsensor auf. Ein Regler legt modellbasiert in Reaktion auf die Größen Lenkradwinkel, Lenkgeschwindigkeit und Fahrzeuggeschwindigkeit fest, ob die vorliegende Lenkbewegung zu einer Kippgefahr führen kann. Zeigen dabei auch Querbeschleunigung und Gierrate hohe Fahrzeugdynamik an, wird der ARP-Eingriff gestartet. Neben den Algorithmen für die Ermittlung der Kippgefahr in einer dynamischen Fahrsituation, limitiert der Regler auch bei quasi stationärer Fahrt die Querbeschleunigung des Fahrzeugs in Abhängigkeit von der Fahrsituation und der Niveaulage des Fahrzeugs bei aktivem Fahrwerk. Der Regler erzeugt in Reaktion auf die ermittelte Kippgefahr des Fahrzeugs ein Steuersignal.

Mittels der gleichen Sensoren ermittelt die Vorrichtung eine Drehtendenz um die Hochachse des Fahrzeugs (ESP). Die Vorrichtung weist einen oder mehrere Gierratensensoren auf, welcher ein zu einer Gierwinkelbewegung des Fahrzeugs korrespondierendes Giergeschwindigkeitssignal erzeugt;
ein Fahrzeugmodell, welches ein zu einer gewünschten Gierwinkelbewegung des Fahrzeugs korrespondierendes Referenzgiergeschwindigkeitssignal erzeugt;
ein Querbeschleunigungssensor, welcher ein zu einer Querbeschleunigung des Fahrzeugs korrespondierendes Querbeschleunigungssignal erzeugt;
einen Lenkwinkelsensor, welcher ein zu einem Lenkwinkel korrespondierendes Lenkwinkelsignal erzeugt;
eine Mehrzahl von Radgeschwindigkeitssensoren, von welchen Radgeschwindigkeitssignale erzeugt werden, die zu jedem der vier Radgeschwindigkeiten korrespondieren;
ggf. einen Längsbeschleunigungssensor oder ein Längsbeschleunigungsmodell, welcher bzw. welches ein zu einer Längsbeschleunigung des Fahrzeugs korrespondierendes Längsbeschleunigungssignal erzeugt. Der Regler ermittelt in Abhängigkeit von der Fahrzeuggeschwindigkeit und dem vom Fahrer eingestellten Lenkwinkel in dem Fahrzeugmodell eine Referenzgierwinkelgeschwindigkeit und vergleicht diese mit der tatsächlichen Gierwinkelgeschwindigkeit. In das Fahrzeugmodell gehen dabei die Signale Lenkwinkel, Fahrzeuggeschwindigkeit, Gierrate und Reibwert ein. Aufgrund der Abweichung dieser beiden Werte errechnet er ein Zusatzgiermoment. Überschreitet dieses Zusatzgiermoment bestimmte Schwellenwerte bzw. ist die Abweichung zwischen der gemessenen Gierrate und modellbasierten Gierrate zu groß, besteht die Gefahr, dass sich das Fahrzeug um die Hochachse dreht. Der Regler erzeugt in Reaktion auf die ermittelte Drehgefahr des Fahrzeugs ein Steuersignal.

Die vorliegende Erfindung erkennt somit auf der Basis des ESP Reglers und der ESP-Sensorik fahrdynamisch kritische Zustände, die zu einem Kippen um die Längsachse des Fahrzeugs und/oder zu einem Drehen um die Hochachse des Fahrzeugs führen können. Die Zustände können dabei einzeln oder gemeinsam auftreten.

Sind die Fahrzeugzustände so kritisch, dass durch einen Bremseneingriff an individuell betätigbaren Bremsen und/oder durch einen Eingriff ins Motormoment und/oder einen Eingriff in ein aktives Lenksystem des ESP/ARP-Systems ein Schleudern oder Kippen nicht verhindert werden kann, können die Informationen Gierrate, Beschleunigung und ggf. Lenkwinkel einem reversiblen (z.B. einem Gurtstraffer) oder nicht reversiblen Insassenschutzmittel (z.B. Airbag) zur Verfügung gestellt werden. Dieses nutzt die Fahrzustandsinformationen zur adaptiven Anpassung der Auslöseschwellen der Insassenschutzmittel. So können beispielsweise die Auslöseschwellen in der fahrdynamisch kritischen Situation "schleudern" abgesenkt werden, so dass bei einem folgenden Seitenaufprall des Fahrzeugs auf ein Objekt die Auslösung eines nicht reversiblen Insassenschutzmittels (z.B. Airbag) überhaupt, eher und/oder angepasst erfolgen kann. Kann ein Kippen des Fahrzeuges trotz ARP-System nicht verhindert werden (Erkennungsalgorithmen über die Verwendung von Energieerhaltungssätzen bzw. die Änderungsgeschwindigkeit der Sensorsignale), so dass ein Überschlag unvermeidlich ist, können die nicht reversiblen Insassenschutzmittel (z.B. Airbag) aktiviert werden. Dies führt zu einer deutlichen Reduktion der potenziellen Unfallfolgen für die Fahrzeuginsassen.

Dabei kann auch vorteilhaft vorgesehen werden, das Auslösesignal für einen reversiblen Gurtstraffer diesem fahrsituationsabhängig zugeordnet wird, so dass eine Festlegung der Position des anzusteuernden Gurtstraffers im Fahrzeug und/oder der Auslösezeitpunkt in Abhängigkeit von der Kipp- und/oder Drehtendenz des Fahrzeugs im Raum erfolgt. Vorgesehen ist weiterhin, dass er Auslösezeitpunkt des anzusteuernden Gurtstraffers nach Maßgabe des ARP-Eingriffs erfolgt, so dass der ARP-Eingriff und der Gurtstraffer gleichzeitig aktiviert werden. Dabei wird über den ARP-Regler ein ARP-Eingriff an mindestens einer Radbremse und/oder einer aktiven Lenkung durchgeführt und gleichzeitig ein Auslösesignal für den Gurtstraffer generiert. Der Sicherheitsgurt wird angespannt. Ist der ARP-Eingriff abgeschlossen, kann der Gurtstraffer wieder gelöst werden.

ARP-Eingriff und die Generierung des Auslösesignals für den Gurtstraffer können auch zeitlich versetzt erfolgen.

Besonders vorteilhaft kann folgendes Schema von dem Regler abgearbeitet werden:

| | |
|---|---|
| Stufe 1: | Erkennen ob ein ARP-Eingriff notwendig ist |
| Stufe 2: | Aktivieren des/der Gurtstraffer und des ARP-Eingriffs |
| Stufe 3: | Erkennen dass der ARP-Eingriff erfolglos (keine Stabilisierung des Fahrzeugs) ist |
| Stufe 4: | Aktivieren des Aibags |

In einem solchen Fall hätte auf Basis heutiger Auslöseentscheidungen keine Aktivierung beispielsweise des Airbags stattgefunden, da die notwendigen Auslösekriterien, wie die Beschleunigung des Fahrzeugs, nicht überschritten worden wären. Dies gilt unter der Bedingung, dass kein Rollratensensor vorhanden ist.

Vorteilhaft wird bei erkanntem Kippen oder Überschlag des Fahrzeuges basierend auf den Fahrdynamikinformationen auch die Standzeit der Airbags angepasst. In einem solchen Fall würden, da es sich um einen im Vergleich zum Front- oder Seitenaufprall sehr langsamen Vorgang-handelt, die Standzeiten deutlich verlängert (auf ca. 1-3sec).

Die Festlegung der zu aktivierenden nicht reversiblen Insassenschutzmittel (z.B. Airbag) hängt von der Fahrsituation ab.

Ein wesentlicher Vorteil dieser adaptiven Auslöseentscheidung ist, dass nun auch Kollisionen außerhalb der Bereiche der Side-Sensoren sicher erkannt werden können, eine Aktivierung des Insassenschutzmittels erfolgen kann und die Insassen auch in diesen Fällen optimal geschützt werden können.

Ein Ausführungsbeispiel ist in der Zeichnung dargestellt und wird im Folgenden näher beschrieben.

Es zeigen
- Fig. 1: die zum Bestimmen einer adaptiven Auslöseentscheidung des Airbags vorgesehenen Ermittlungseinheiten
- Fig. 2: ein Ablaufschema zum Bestimmen der Anpassung der Auslöseschwellen in einer fahrdynamisch kritischen ESP-Situation
- Fig. 3: eine Vorrichtung nach der Erfindung

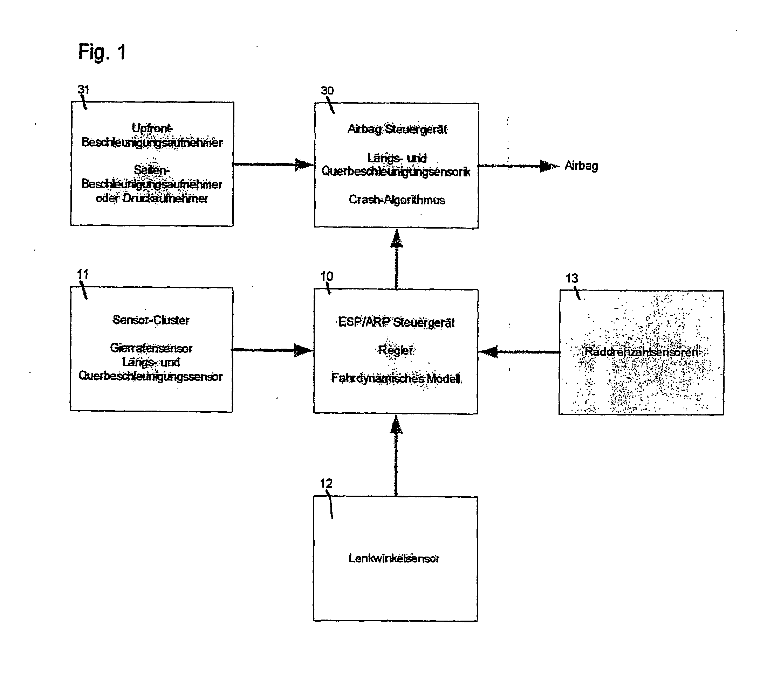

Figur 1 zeigt erste und zweite Ermittlungseinheiten 10, 30 die mit drei Erfassungseinheiten 11, 12, 13, 31 verbunden sind. Die Erfassungseinheit 11 ist bevorzugt als Sensor-Cluster ausgebildet, der mindestens einen Gierratensensor, einen Längsbeschleunigungssensor und einen Querbeschleunigumgssensor enthält. Der Längsbeschleunigungssensor kann auch durch ein Längsbeschleunigungsmodell ersetzt sein, das dann bevorzugt in der Ermittlungseinheit 11 angeordnet ist. Obwohl die Ausbildung als Sensor-Cluster Vorteile im Hinblick auf die Anordnung im Fahrzeug und bei der Verarbeitung der von den Sensoren erfassten Informationen aufweist, können die Sensoren auch separat mit der Ermittlungseinheit 11 verbunden sein. Die zweite Erfassungseinheit 12 ist als Lenkwinkelsensor ausgebildet, während die dritte Erfassungseinheit 13 die jedem Rad des Fahrzeugs zugeordneten Raddrehzahlsensoren umfasst. Die Erfassungseinheiten 11, 12, 13 ermitteln oder messen die Gierwinkelgeschwindigkeit, ggf. Längsbeschleunigung, Querbeschleunigung, den Lenkradwinkel, die Lenkgeschwindigkeit, ggf. den Lenkwinkel an den Rädern und die Fahrzeuggeschwindigkeit (aus der Bewegung der Räder). Diese Daten werden der ersten Ermittlungseinheit 10 zur Verfügung gestellt. Diese Ermittlungseinheit ist als ESP- und ARP-Regler ausgebildet. Das im ESP bzw. GMK-Regler 10 abgelegte Fahrzeugmodell berechnet anhand des Lenkwinkels, der Fahrzeuggeschwindigkeit und der gemessenen Gierwinkelgeschwindigkeit eine Vorgabe für die Änderung der Gierwinkelgeschwindigkeit. Dieses anhand der Daten der Erfassungseinheiten 11, 12, 13 ermittelte Zusatzgiermoment, das aus der Differenz der mit dem Gierratensensor gemessenen Gierwinkelgeschwindigkeit und der im fahrdynamischen Fahrzeugmodell berechneten Referenzgierwinkelgeschwindigkeit gebildet wird, bildet die Basis für die Steuerung der Bremsaktuatoren.

Im ARP-Regler der Erfassungseinheit 10 wird über eine modellbasierte Berechnung im fahrdynamischen ARP-Modell aus den Größen Lenkradwinkel, Lenkgeschwindigkeit und Fahrzeuggeschwindigkeit ermittelt, ob die Lenkbewegung zu einer Kippgefahr führen kann. Plausibilisiert wird die Kippgefahr über die Querbeschleunigung und Gierrate. Zeigen diese Signale eine hohe Fahrdynamik an, bildet der ein hochdynamisches Anlenken repräsentierende Wert der modellbasierten Berechnung die Basis der Steuerung der Bremsaktuatoren.

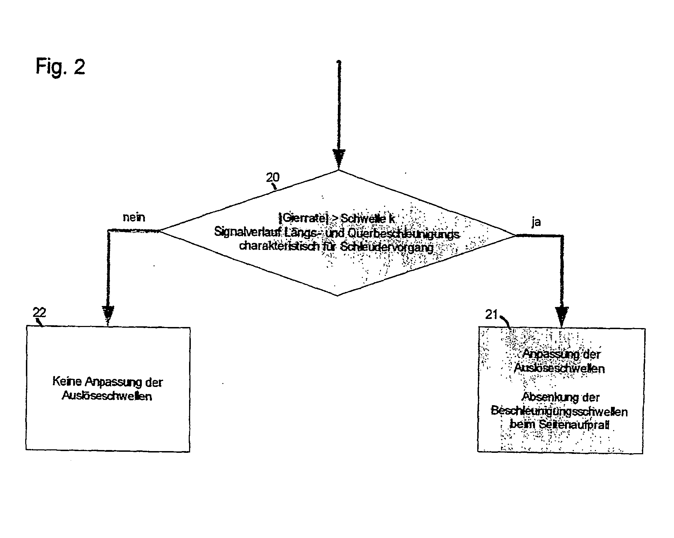

Die Ermittlungseinheit 30 ist mit der Erfassungseinheit 31 verbunden, die der Vorderseite und den Seiten des Fahrzeugs zugeordnete, sogenannte Upfront-Beschleunigungsaufnehmer und Seitenbeschleunigungs- oder Druckaufnehmer aufweist. Die Daten der Erfassungseinheit 31 werden der Ermittlungseinheit 30 zur Verfügung gestellt. Diese verarbeitet die Daten zusammen mit den von weiteren Längs- und Querbeschleunigungssensoren ermittelten Informationen bei einem Kontakt des Fahrzeugs mit einem in seiner Bahn befindlichen Objekt. Die weiteren Längs- und Querbeschleunigungssensoren sind bevorzugt zentral in der Ermittlungseinheit 30 angeordnet. Zur Verarbeitung der Informationen ist in der Ermittlungseinheit 30 ein Crash-Algorithmus vorgesehen. Bestandteil des Crash-Algorithmus ist der in Figur 2 beispielhaft dargestellte Ablauf zur Adaption des jeweiligen Fahrmanövers. Dabei wird mindestens einer zur Festlegung der Auslösentscheidung des Airbags bestimmender Schwellenwert a in Abhängigkeit von wenigstens einer separat ermittelten Fahrdynamikgröße aus der Ermittlungseinheit 10 variiert. Die logische Verzweigung ist als Raute dargestellt. In Raute 20 ist beispielhaft der Betrag der Gierratendifferenz | Δψ̇ |> einem Schwellenwert k, d.h. die Abweichung des vom Fahrer über das Lenkrad vorgegebenen Bahnverlaufs des Fahrzeugs, der der Referenzgierrate entspricht, von der gemessenen Gierrate ist größer als der Wert k. Damit ist ein erstes Entscheidungskriterium zur Modifikation des Schwellenwerts a der Airbagauslöseentscheidung erfüllt. Werden dann anhand des Signalverlaufs der Längs- und Querbeschleunigung charakteristische Signalmuster für eine extreme Drehung um die Hochachse ermittelt, ist das zweite Entscheidungskriterium zur Modifikation des Schwellenwerts a erfüllt. Es wird auf die Situation 21 erkannt, d.h. der Schwellenwert a zur Auslösung der/des Airbags kann an das Fahrmanöver, hier im Beispiel "Schleudern" des Fahrzeugs, adaptiert werden. Werden die Entscheidungskriterien nicht erfüllt, wird auf Situation 22 erkannt. Der Schwellenwert wird nicht angepasst.

Neben der vorstehend beispielhaft genannten Gierratendifferenz kann bzw. können auch die gemessene Gierwinkelgeschwindigkeit, die Lenkwinkelgeschwindigkeit, der Lenkradwinkel und/oder die Querbeschleunigung zur Fahrmanövererkennung herangezogen werden.

Der Figur 2 beispielhaft dargestellte Ablauf zur Adaption des jeweiligen Fahrmanövers an die Auslösentscheidung mindestens eines Airbags wird auch bei ermittelten Fahrdynamikgrößen aus der Ermittlungseinheit 10 in Hinblick auf Kipptendenzen durchlaufen. In Raute 20 wird dann beispielhaft der Lenkradwinkel, die Lenkgeschwindigkeit und die Fahrzeuggeschwindigkeit mit Schwellenwerten k1, k2, k3 verglichen und die Lenkbewegung in Hinblick auf eine Kippgefahr ausgewertet. Überschreitet die Kippgefahr einen Schwellenwert k4, kippt das Fahrzeug um seine Längsachse und kann nicht mehr mittels eines Bremseneingriffs stabilisiert werden. Damit ist ein erstes Entscheidungskriterium zur Modifikation des Schwellenwerts a der Airbagauslöseentscheidung erfüllt. Werden anhand des Signalverlaufs der Gierrate und der Querbeschleunigung charakteristische Signalmuster für eine hohe Fahrzeugdynamik um die Längsachse ermittelt, ist das zweite Entscheidungskriterium zur Modifikation des Schwellenwerts a erfüllt. Es wird auf die Situation 21 erkannt, d.h. der Schwellenwert a zur Auslösung der/des Airbags kann an das Fahrmanöver, hier im Beispiel "Kippen" des Fahrzeugs, adaptiert werden.

Vorzugsweise werden die bei einem Front- bzw. Seitenaufprall des Fahrzeugs vorgesehenen Schwellenwerte für die Auslöseentscheidung bei erfüllten Entscheidungskriterien der Fahrmanövererkennung und Signalmusteranalyse des Airbags modifiziert. Dabei werden die Schwellenwerte für Auslöseentscheidungen bei einem erwarteten Frontalaufprall kleiner 30ms, bei einem Seitenaufprall kleiner 10ms getroffen. Durch die Wahl bzw. die Festlegung der entsprechenden Schwellwerte in Abhängigkeit von der Fahrdynamik der aktiven Sicherheitssysteme basierend auf Gierrate, Lenkwinkel, Fahrzeuggeschwindigkeit, Lenkwinkel, Lenkwinkelgeschwindigkeit, Quer- und ggf. Längsbeschleunigung können die nicht reversiblen Insassenschutzsysteme bei einer Kollision des Fahrzeugs mit einem Objekt rechtzeitig ausgelöst werden.

Neben der Modifikation der Schwellwerte zur Auslöseentscheidung der Insassenschutzmittel kann bei erkanntem Kippen oder Überschlag des Fahrzeuges basierend auf den Fahrdynamikinformationen auch die Standzeit der Airbags an das Fahrmanöver angepasst werden. In einem solchen Fall würden, da es sich um einen im Vergleich zum Front- oder Seitenaufprall sehr langsamen Vorgang handelt, die Standzeiten (Dauer der gefüllten Airbag-Zustandes) deutlich verlängert (auf ca. 1-3sec).

Auch können die potenziellen Unfallfolgen für die Fahrzeuganwesenden verringert werden in der Form:
a) Teilzündung / gestuftes Zünden (diskret bzw. analog) mindestens eines Airbags
b) Vollzündung mindestens eines Airbags

Die Festlegung der zu aktivierenden Airbags hängt von der Fahrsituation ab.

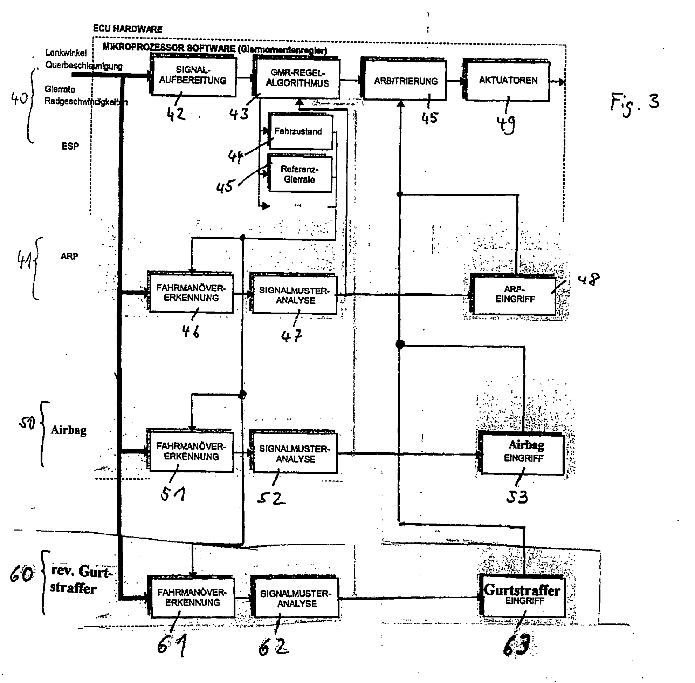

In Figur 3 ist das Erfassungssystem mit der Vorrichtung 40 zur Ermittlung der Drehtendenz um die Hochachse des Fahrzeugs und mit der Vorrichtung 41 zur Erfassung der Kipptendenz um die Längsachse schematisch dargestellt. Der grundsätzliche Aufbau und die Funktion der Vorrichtung 40 ist in der EP 792228 B1 (ESP) näher beschrieben, deren Inhalt Bestandteil der vorliegenden Erfindung ist. Der grundsätzliche Aufbau und die Funktion der Vorrichtung 41 ist in der WO02/36401 A1 beschrieben, deren Inhalt ebenfalls Bestandteil der vorliegenden Erfindung ist. Dabei ist die Struktur des Erfassungssystems modular ausgebildet. Der Modul ESP-Regler 40 weist die Funktionsbausteine Signalaufbereitung 42, GMR-Regel-Algorithmus 43 mit den Untersystemen Fahrzustand 44, Referenzgierrat45 und dgl. sowie der Arbitrierung 45, wie sie in der oben genannten EP 792228 B1 näher beschrieben sind, auf. Der Modul ARP-Regler 41 weist die Fünktionsbausteine Fahrmanövererkennung 46, Signalmusteranalyse 47 und ARP-Eingriff 48, wie er in der EP 792228 B1 näher beschrieben ist, auf. Der Modul ARP-Regler 41 ist mit dem Funktionsbaustein Fahrzustand 44 des ESP-Reglers gekoppelt, der der Fahrmanövererkennung 46 die Information bzw. die Signale zur Verfügung stellt, die in 46 und 47 bei einem stabilen Fahrverhalten die Ermittlung eines hochdynamischen Anlenkens ermöglichen. Bei ermitteltem hochdynamischen Anlenken in wird auf eine Tendenz zu einem Kippverhalten geschlossen. Zeigen dabei auch Querbeschleunigung und Gierrate eine hohe Fahrdynamik an, wird ein ARP-Eingriff 48 in mindestens eine Bremse veranlasst Das hochdynamische Anlenken wird in Abhängigkeit von dem zeitlichen Verlauf der Lenkradwinkelgeschwindigkeit erkannt.

Die ARP-Eingriff 48 ermittelten Druckanforderungen werden der Arbitrierung 45 zur Verfügung gestellt.

Als weiterer Modul ist die Airbag-Steuerung 50 mit den Funktionsbausteinen Fahrmanövererkennung 51 und Signalmusteranalyse 52 sowie Airbag-Eingriff 53 und der Modul Gurtstraffer 60 mit den Funktionsbausteinen Fahrmanövererkennung 61 und Signalmusteranalyse 62 sowie Gurtstraffer-Eingriff 63 vorgesehen. Das Ergebnis der des Airbag-Eingriffs 53 und des Gurtstraffer-Eingriffs 63 werden ebenfalls der Arbitrierung 45 zur Verfügung gestellt. Die Arbitrierung 45 hat die Aufgabe aus dem Fahrzustand zu entscheiden, welche Aktuatoren 49 anzusteuern sind und in welcher zeitlichen Reihenfolge.

Die vorstehend beschriebene Vorrichtung gemäß Figur 3 stellt nur eine prinzipielle Ausbildung dar, die dahingehend abgeändert werden kann, dass die Fahrmanövererkennung 46, 51, 61 ebenso wie die Signalmustererkennung 47, 52, 62 auch in einer gemeinsamen Baueinheit ausgeführt werden könne. Darüber hinaus können auch die Fahrmanövererkennung 46, 51, 61 und die Signalmustererkennung 47, 52, 62 als gemeinsame Einheit ausgebildet werden.

### Ausführungsbeispiele:

Im Fahrzeug befindet sich eine Sitzerkennung (z.B. nur der Fahrer ist im Fahrzeug) und es wird ein Kippen auf die linke Fahrzeugseite erkannt, so wird in einer Ausführungsform nur der seitliche Airbag auf der Fahrerseite (vorne links) aktiviert (bei Linksverkehr entsprechend andere Logik). Die Stärke der Airbagzündung ist abhängig von der Art der Fahrzeugbewegung. Bei langsamem Kippen auf die Seite könnte nur eine Teilzündung / gestuftes Zünden erfolgen, bei einem schnellen Kippen oder Überschlag eine Vollzündung mindestens eines Airbag.

Wird in einem anderen Anwendungsbeispiel erkannt, dass vom Fahrer kein Sicherheitsgurt angelegt wurde und ein schnelles Kippen erkannt wurde, so können alle Airbags im Vorderbereich des Fahrzeuges voll aktiviert werden, da der Fahrer beliebig im Vorderraum hin- und hergeschleudert werden kann und ein Verletzungsrisiko somit sehr hoch ist.

Komponentenkosten können eingespart werden, wenn z.B. Überrollerkennungssensoren im Fahrzeug verwendet werden. Diese Sensoren werden nicht mehr benötigt, da man auf die ESP-Sensorik zurückgreifen kann. Überrollerkennungssensoren werden dann nur noch in speziellen Fällen (z.B. bei Cabrios) benötigt, wenn ein Überrollen eindeutig erkannt werden muss und entsprechend Überrollbügel auszufahren sind (kein Kopfschutz im Fahrzeug sonst vorhanden).

## Patentansprüche

1. Vorrichtung zum Ermitteln einer Kipptendenz um die Längsachse und einer Drehtendenz um die Drehachse eines Fahrzeugs, mit einem Erfassungssystem, mit:
einem Querbeschleunigungssensor, der ein Querbeschleunigungssignal erzeugt, mit einem Gierratensensor, der ein Drehratensignal erzeugt, mit einem Lenkwinkelsensor, der ein Lenkwinkelsignal erzeugt, mit Raddrehzahlsensoren, die Drehbewegungssignale der Räder erzeugen, und mit einem Regler, der in Reaktion auf den Lenkradwinkel, die
Lenkradgeschwindigkeit und die Fahrzeuggeschwindigkeit eine Kipptendenz um die Längsachse des Fahrzeugs feststellt und der in Reaktion auf den Querbeschleunigungssensor, den Gierratensensor, den Lenkwinkelsensor und den Raddrehzahlsensoren die Drehtendenz um die Hochachse des Fahrzeugs feststellt, **dadurch gekennzeichnet, dass** der Regler in Abhängigkeit von der Ausprägung dieser Tendenzen ein Auslösesignal für mindestens ein Insassenschutzmittel variiert, wobei das Auslösesignal den Insassenschutzmitteln fahrsituationsabhängig zugeordnet wird, so dass eine Festlegung der Position des anzusteuernden Insassenschutzmittels im Fahrzeug in Abhängigkeit von der Kipp- und/oder Drehtendenz des Fahrzeugs im Raum erfolgt.

2. Vorrichtung nach Anspruch 1, **dadurch gekennzeichnet, dass** die Ausprägung der Kipptendenz und/oder der Drehtendenz anhand von mindestens einer der Größen Lenkradwinkel, Lenkradgeschwindigkeit, Fahrzeuggeschwindigkeit, Querbeschleunigung, Längsbeschleunigung bewertet wird.

3. Vorrichtung nach einem der Ansprüche 1 oder 2, **dadurch gekennzeichnet**, mindestens ein Schwellenwert des Auslösesignals variiert wird.

4. Vorrichtung nach Anspruch 1, **dadurch gekennzeichnet**, mindestens als Schwellenwert die Auslösezeit variiert wird

5. Vorrichtung nach einem der Ansprüche 1 bis 4, **dadurch gekennzeichnet, dass** in Abhängigkeit von der Fahrsituation die Standzeit des Insassenschutzmittels modifiziert wird.

6. Vorrichtung nach Anspruch 1 oder 5, **dadurch gekennzeichnet, dass** das Insassenschutzmittel ein Airbag ist.

7. Vorrichtung nach Anspruch 1, **dadurch gekennzeichnet, dass** das Insassenschutzmittel ein reversibler Gurtstraffer ist.

8. Vorrichtung nach Anspruch 7, **dadurch gekennzeichnet, dass** das Auslösesignal für den reversiblen Gurtstraffer diesem fahrsituationsabhängig zugeordnet wird, so dass eine Festlegung der Position des anzusteuernden Gurtstraffers im Fahrzeug und/oder der Auslösezeitpunkt in Abhängigkeit von der Kipp- und/oder Drehtendenz des Fahrzeugs im Raum erfolgt.

9. Vorrichtung nach Anspruch 7 oder 8, **dadurch gekennzeichnet, dass** der Auslösezeitpunkt des anzusteuernden Gurtstraffers nach Maßgabe des ARP-Eingriffs erfolgt, so dass der ARP-Eingriff und der Gurtstraffer gleichzeitig aktiviert werden.

## Claims

1. Device for determining a tendency to tilt about the longitudinal axis and a tendency to turn about the axis of rotation of a vehicle, with a detection system, with:
a transverse-acceleration sensor generating a transverse-acceleration signal, with a yaw rate sensor generating a rotational-speed signal, with a steering-angle sensor generating a steering-angle signal, with wheel speed sensors generating rotational-movement signals of the wheels, and with a controller that determines, in response to the steering-wheel angle, the steering-wheel speed and the vehicle speed, a tendency to tilt about the longitudinal axis of the vehicle and that determines, in response to the transverse-acceleration sensor, the yaw rate sensor, the steering-angle sensor and the wheel speed sensors, the tendency to turn about the vertical axis of the vehicle, **characterized in that** the controller varies a triggering signal for at least one passenger protection means depending on the markedness of said tendencies, wherein the triggering signal is assigned to the passenger protection means depending on the driving situation so that the in-vehicle position of the passenger protection means to be triggered is fixed depending on the vehicle's tendency to tilt and/or to turn in space.

2. Device according to claim 1, **characterized in that** the markedness of the tendency to tilt and/or of the tendency to turn is assessed on the basis of at least one of the following quantities: steering-wheel angle, steering-wheel speed, vehicle speed, transverse acceleration, longitudinal acceleration.

3. Device according to any one of claims 1 or 2, **characterized in that** at least one threshold value of the triggering signal is varied.

4. Device according to claim 1, **characterized in that** at least the triggering time is varied as a threshold value.

5. Device according to any one of claims 1 to 4, **characterized in that** the period of time during which the passenger protection means is in its activated state is modified depending on the driving situation.

6. Device according to claim 1 or 5, **characterized in that** the passenger protection means is an airbag.

7. Device according to claim 1, **characterized in that** the passenger protection means is a reversible seat belt tensioner.

8. Device according to claim 7, **characterized in that** the triggering signal for the reversible seat belt tensioner is assigned to the reversible seat belt tensioner depending on the driving situation so that the in-vehicle position of the seat belt tensioner to be triggered is fixed and/or the instant of triggering occurs depending on the vehicle's tendency to tilt and/or to turn in space.

9. Device according to claim 7 or 8, **characterized in that** the instant of triggering the seat belt tensioner to be triggered occurs according to the ARP intervention so that the ARP intervention and the seat belt tensioner are activated at the same time.

## Revendications

1. Dispositif pour déterminer une tendance au basculement autour de l'axe longitudinal et une tendance à la rotation autour de l'axe de rotation d'un véhicule, avec un système de détection, avec
un capteur d'accélération transversale qui produit un signal d'accélération transversale, avec un capteur de taux d'embardée qui produit un signal de taux d'embardée, avec un capteur d'angle de braquage qui produit un signal d'angle de braquage, avec des capteurs de vitesse de rotation de roues qui produisent des signaux de mouvement rotatif des roues, et avec un régulateur qui, en réaction à l'angle du volant de direction, à la vitesse du volant de direction et à la vitesse du véhicule, constate une tendance au basculement autour de l'axe longitudinal du véhicule et qui, en réaction au capteur d'accélération transversale, au capteur de taux d'embardée, au capteur d'angle de braquage et aux capteurs de vitesse de rotation des roues, constate la tendance à la rotation autour de l'axe vertical du véhicule, **caractérisé en ce que** le régulateur, en fonction du degré de manifestation de ces tendances, fait varier un signal de déclenchement d'au moins un moyen de protection des occupants, le signal de déclenchement étant affecté aux moyens de protection des occupants en fonction de la situation de conduite de telle sorte qu'une constatation de la position du moyen de protection des occupants à piloter dans le véhicule s'effectue en fonction de la tendance au basculement et/ou de la tendance à la rotation du véhicule dans l'espace.

2. Dispositif selon la revendication 1, **caractérisé en ce que** le degré de manifestation de la tendance au basculement et/ou de la tendance à la rotation est évalué à l'aide d'au moins une des grandeurs angle du volant de direction, vitesse du volant de direction, vitesse du véhicule, accélération transversale, accélération longitudinale.

3. Dispositif selon une des revendications 1 ou 2, **caractérisé en ce qu'**au moins une valeur de seuil du signal de déclenchement fait l'objet d'une variation.

4. Dispositif selon la revendication 1, **caractérisé en ce que** le temps de déclenchement fait l'objet d'une variation au moins en tant que valeur de seuil.

5. Dispositif selon une des revendications 1 à 4, **caractérisé en ce que**, en fonction de la situation de conduite, la durée de fonctionnement du moyen de protection des occupants est modifiée.

6. Dispositif selon la revendication 1 ou 5, **caractérisé en ce que** le moyen de protection des occupants est un airbag.

7. Dispositif selon la revendication 1, **caractérisé en ce que** le moyen de protection des occupants est un prétensionneur de ceinture réversible.

8. Dispositif selon la revendication 7, **caractérisé en ce que** le signal de déclenchement pour le prétensionneur de ceinture réversible est affecté à celui-ci en fonction de la situation de conduite de telle sorte qu'une constatation de la position du prétensionneur à piloter dans le véhicule est effectuée et/ou le moment du déclenchement intervient en fonction de la tendance au basculement et/ou de la tendance à la rotation du véhicule dans l'espace.

9. Dispositif selon la revendication 7 ou 8, **caractérisé en ce que** le moment du déclenchement du prétensionneur de ceinture à piloter intervient conformément à l'intervention de la protection active anti-capotage (ARP) de telle sorte que l'intervention de l'ARP et le prétensionneur de ceinture sont activés simultanément.
